# EUROPEAN PATENT SPECIFICATION

(11) **EP 3 546 100 B1**
(45) Date of publication and mention of the grant of the patent: **03.08.2022**
(21) Application number: 18186041.2
(22) Date of filing: 27.07.2018
(51) Int. Cl.: B23D 57/00, B28D 1/08

(54) **DIAMOND WIRE COMPACT CUTTING MACHINE FOR THE CUTTING OF STONES OR THE LIKE IN A QUARRY**
DIAMANTDRAHTKOMPAKTSCHNEIDEMASCHINE ZUM SCHNEIDEN VON STEIN ODER ÄHNLICHEN MATERIALIEN IN EINEM STEINBRUCH
MACHINE DE COUPE COMPACTE À FIL DIAMANT POUR LA COUPE DE PIERRE OU SIMILAIRES DANS UNE CARRIÈRE

(30) Priority: 27.03.2018 ES 201830425 U
(43) Date of publication of application: 02.10.2019
(73) Proprietor: Widi HDC, S.L.U., 36600 Vilagarcia de Arousa (Pontevedra) (ES)
(72) Inventor: Villanueva Vidal, Antonio, 36600 VILAGARCIA DE AROUSA (Pontevedra) (ES)
(74) Representative: Díaz de Bustamante y Terminel, Isidro

(56) References cited:
- EP-A1- 0 738 194
- EP-A1- 2 505 290
- ES-U- 1 170 959
- JP-A- H10 315 190
- JP-A- 2002 086 441

## Description

### OBJECT OF THE INVENTION

The invention, as exposed on the wording of the present specification, relates to a diamond wire compact cutting machine for the cutting of stones or the like in a quarry. More specifically, the object of the invention focuses on a machine for cutting stone, marble, slate or the like in a quarry by diamond wire, in particular a machine which, in a known manner, has a compact structural configuration, with a single chassis of reduced dimensions that does not work on guides and is self-propelled, automatic and totally independent, and is distinguished by a series of improvements, mainly referred to the possibility of collapsing the tightening column and the possibility of horizontal and vertical displacement of its legs, which make its use and manageability even more versatile.

### APPLICATION FIELD OF THE INVENTION

The application field of the present invention is framed within the field of industry dedicated to the manufacture of cutting machines, apparatuses and devices, focusing particularly on the field of those intended for the cutting of stones and the like in a quarry, and more particularly those using diamond wire therefor. EP0738194 discloses a diamond wire compact cutting machine according to the preamble of claim 1.

### BACKGROUND OF THE INVENTION

As is known, cutting machines with diamond wire can be, in a rough way, of two types, or in the form of a bridge, with the wire tightened across it between the two pillars of the bridge that it forms, so that they cut the stone located in its centre when passing along it, or with the wire inserted in one or more pulleys, which is tightened forming a loop around the stone to be cut, in which case they are usually installed on some guides to control the sliding movement of the machine when cutting the stone.

There are also some machines of this second type that remain static when cutting and, therefore, do not move through any guide, in which case the wire is tightened by different systems, the machine object of the present invention being of the latter type, but with an improved structural configuration that facilitates its use and that provides relevant advantages over other similar machines on the market.

To solve these drawbacks, the applicant himself has developed a diamond wire compact cutting machine for quarry described in Utility Model U201631275, which, essentially, comprises a single compact chassis to which, by one of its sides, the pulleys are coupled; some of which are fixed pulleys and are directly coupled to the chassis and at least two are movable pulleys, being incorporated in a cart with movement of vertical displacement along a tightening column that extends superiorly above the chassis, determining the separation between the fixed and movable pulleys the tightening of the wire.

In addition, among other features, the chassis has wheels linked to motors for their displacement, and the cart is associated with a chain mechanism provided in guides incorporated in the column that is driven by a first motor and, optionally, the movement of the wire is made in both directions by means of a drive pulley driven by a second bidirectional drive motor, through a selector for selecting that the cut is made from the front or rear of the chassis.

Thus, said machine, although satisfactorily fulfils the objectives for which it is intended, presents a number of factors susceptible to be improved, the object of the present invention being the development of said improvements in said machine.

More specifically, the problems that come to solve the improvements of the machine are several, being nevertheless the essential one, the one posed by the dimensions thereof, especially due to the existence of the tightening column, for the operations of transport in the displacements of the machine from one quarry to another, since in the existing machine said column is an element joined together to the chassis, being therefore, one of the essential objectives of the present invention the development of an improved machine whose dimensions can be reduced by the collapsing of the tightening column.

On the other hand, when a cut with diamond wire is going to be made, the machine pulley has to be put in line with the hole drilled in the stone wall and we are talking about distances of 5 cm, so that the corresponding centering is the one that takes more time in order to be able to make the centered cut and so that it does not affect the pulleys, this being another problem that is solved with the optional improvements of the machine proposed herein, since it is provided with horizontal displacement of the chassis on the legs to achieve this alignment.

Likewise, another of the major problems to make a cut of a stone bench in a quarry is the state of the floor "that is never flat" and also, in the cuts you can see the "walk" of the stone to make the cut with the best use of the material to be cut, which is why it would also be desirable to equip the machine with legs that move independently vertically and thus be able to place it on any terrain and be able to make a cut at any angle, and not necessarily square as they were being made.

Finally, until now the displacements and operation of the cutting machine are made only with the electric motors available, which can cause delays in the work if, for any reason, these do not work, so it would be desirable to have other additional means to avoid such eventuality.

Mention must be made, on the other hand, and as a reference to the current state of the art, that at least by the applicant, it is unknown the existence of any other cutting machine presenting technical, structural and constitutive characteristics similar to the ones presented by the one herein claimed.

### EXPLANATION OF THE INVENTION

Thus, the diamond wire compact cutting machine for quarry is configured as a remarkable novelty within its field of application, as, according to its implementation and unequivocally, the objects above pointed as suitable are satisfactorily achieved, being the characterizing details that distinguish it conveniently collected in the final claims accompanying the present description

Specifically, what the invention proposes, as pointed out above, is a cutting machine intended for the cutting of stone, marble, slate or the like in a quarry by means of diamond wire moved and tightened by means of pulleys, being of those comprising a single compact chassis to which, by one of its sides, the pulleys are coupled, some of which are fixed pulleys and are directly coupled to the chassis, among which there is at least one drive pulley, and at least two are movable pulleys that are incorporated in a cart with movement of vertical displacement along a tightening column that extends superiorly above the chassis, which allows to regulate the separation between the fixed and movable pulleys to achieve the tightening of the wire that, extending from the front face of the chassis, is arranged surrounding the stone to be cut at the chosen point.

In addition, also in a known manner, the chassis has four legs on which it is supported in its use position and, for its autonomous displacement without the need for guides, it has wheels linked to independent motors.

Likewise, for the drive of the pulleys that move and tighten the wire, the cart is associated with a chain mechanism provided in guides incorporated in the column that is driven by another motor and the drive pulley is linked to a bidirectional drive motor so as to impart movement to the wire in both directions and allow the cut to be made from the front or from the rear of the chassis.

And, from this already known configuration, the cutting machine proposed by the present invention is distinguished, essentially, because the aforementioned wire tightening column is collapsible, avoiding that it has to be inclined when moving from a quarry to another on top of the transport vehicle, by considerably reducing the height of the assembly for this purpose.

To this end, preferably, said column is coupled to the chassis through an articulated joint, for example, hinged and provided with corresponding locking mechanisms to fix both its elevated vertical use position and its folded transport position.

Likewise, according to a characteristic of the machine, the legs of the chassis are coupled to the chassis with the possibility of movement of horizontal displacement, specifically in lateral direction so as to allow the displacement of said chassis, once anchored on the legs, from one side to another and regulate its position in front of the stone or element to be cut, preferably in a stretch of up to 20 cm, whereby the position of the machine and, therefore, the wire with respect to the cutting point or hole, can be perfectly aligned.

To this end, in the preferred embodiment, said legs are coupled to the lower part of the chassis coupled to guides on which, in the form of rails through which it moves in one direction or another, the chassis is supported, being provided with corresponding stops of end of stroke in each end for avoiding the displacement beyond what was planned and fixing the position once regulated the displacement.

Continuing with the particularities of the machine, it should also be noted that the legs have the possibility of independent vertical displacement in each of them in a significant stretch, so that they can be adjusted not only to level the chassis and that the column is perfectly vertical when the terrain is not completely flat, but they also allow to give it the necessary inclination to be adapted to oblique cuts that can allow a better use of the material, avoiding the obligation to make the square cuts that are being made so far with the existing machines.

Finally, it should be noted that, in the preferred embodiment, for the operation of the machine, in addition to the electric motors mentioned in the cart and the drive pulley, it also has hydraulic operating mechanisms, both types of movement generators being incorporated into their functionality, so that, as appropriate, the use of one or the other can be chosen.

The described diamond wire compact cutting machine for quarry represents, thus, an innovation with structural and constitutive characteristics unknown so far, reasons which in combination with its practical utility, provide it with enough basis to obtain the exclusivity privilege which is applied for.

### DESCRIPTION OF THE DRAWINGS

In order to complement the description being fulfilled of the invention and with the aim of helping to a better understanding of the characteristics of the invention, the present specification is accompanied, as an integral part thereof, by a set of plans, in which by way of illustration and not of limitation, is represented the following:
Figures number 1, 2, 3 and 4.- Show respective schematic views of the machine object of the invention. Specifically, an elevation view of its rear face opposite to the one facing the cutting surface, an elevation view of the side face where the pulleys are located, an elevation view of its front face facing the cutting surface and an elevation view of the lateral face opposite the pulleys, being appreciated in them the main parts and elements it comprises, as well as their configuration and arrangement.

Figure number 5.- Shows a front elevational view of the machine, according to the invention, showing the two positions, elevated for use and collapsed for transport, which presents the wire tightening column.

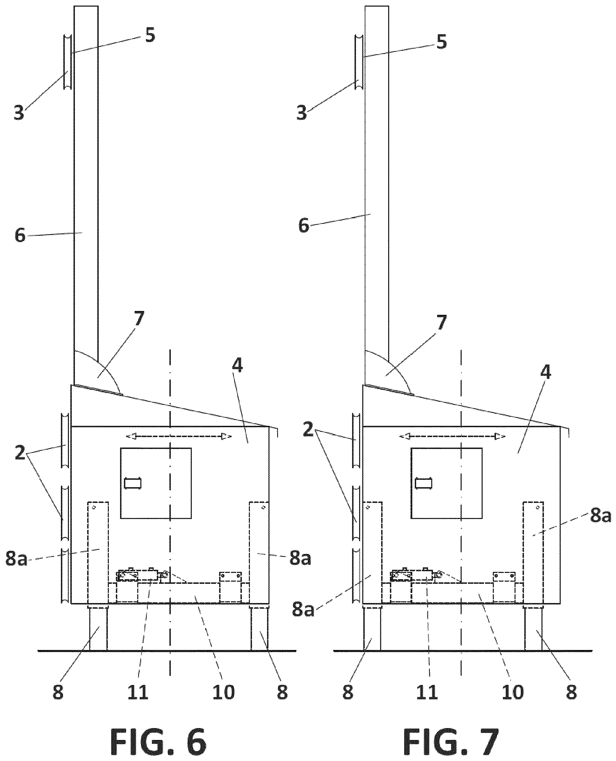

Figures number 6 and 7.- Show two views in front elevation of the machine of the invention, with the legs moved horizontally in two different positions, away from the pulleys in figure 6 and brought closer to the pulleys in figure 7, with respect to their position under the chassis, for regulating the horizontal position of the machine and, with that, the position of the wire for making the cut.

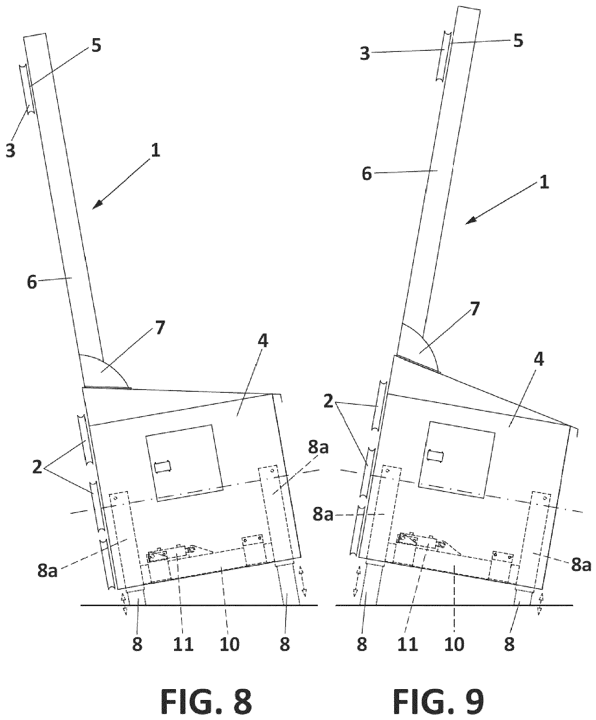

And figures number 8 and 9.- Show two views in front elevation of the machine of the invention, in this case with the legs moved vertically at different heights, higher those on the side opposite to the pulleys in figure 8 and higher those on the side of the pulleys in figure 9, for regulating the vertical position of the machine and, with that, the inclination of the wire for making the cut.

### PREFERENTIAL EMBODIMENT OF THE INVENTION

In light of the mentioned figures, and according to the numbering taken on them, it can be seen a non-limiting example of the proposed diamond wire compact cutting machine for quarry, which comprises the parts and elements indicated and described in detail below.

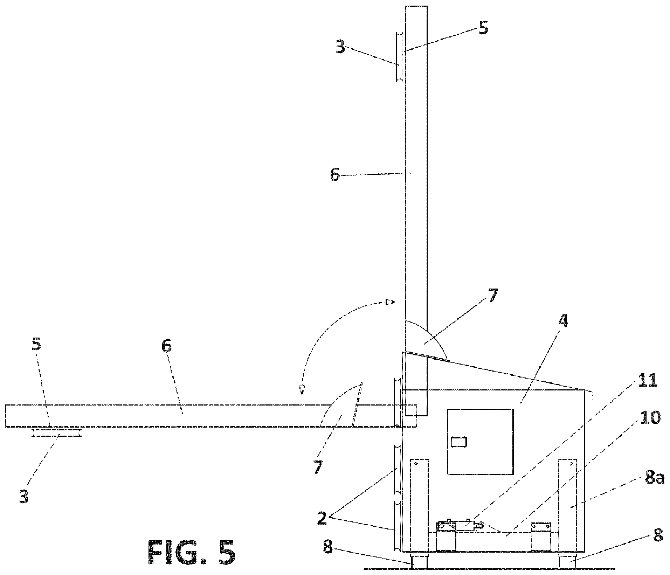

Thus, paying attention to these figures, it can be seen how the machine (1) in question, being of those with pulleys (2, 3) to insert between them a cutting diamond wire whose movement and tightening allows to cut stones and the like interposed in their trajectory in quarries, comprising a single compact chassis (4), preferably of rectangular prismatic configuration, to which, by one of its sides, the pulleys (2, 3) are coupled, so that a plurality thereof are fixed pulleys (2), that is, coupled directly to the chassis (4) contemplating between them a drive pulley (2'), and at least two are movable pulleys (3) and are incorporated in a cart (5) with movement of vertical displacement along a tightening column (6) that extends superiorly above said chassis (4), so that said movement of the cart (5) determines the separation between the fixed pulleys (2) and the movable pulleys (3) to achieve the tightening of the wire, with the particularity that said wire tightening column (6) is collapsible, as seen in figure 5.

To this end, preferably, the column (6) is coupled to the chassis (4) by means of an articulated joint (7), for example, hinged, and provided with locking mechanisms (not shown) that fix it in an elevated vertical use position (represented by solid lines in the aforementioned figure 5) and in a folded transport position (represented by dashed lines).

In addition, the four legs (8) which the chassis (4) has for its support in the use position, incorporated in the base thereof together with the motorized wheels (9) that also have for its autonomous movement, are coupled to said chassis with the possibility of movement of horizontal displacement, in a lateral direction, as seen in figures 6 and 7, preferably in a stretch of up to 20 cm, for regulating the position of the chassis (4) and perfectly aligning the wire with respect to the cutting point or hole.

To this end, preferably, said legs (8) are coupled, in the lower part of the interior of the chassis (4), to guides (10) over which, in the manner of rails, the chassis (4) is supported and moved from one side to another, its stroke being limited at each end.

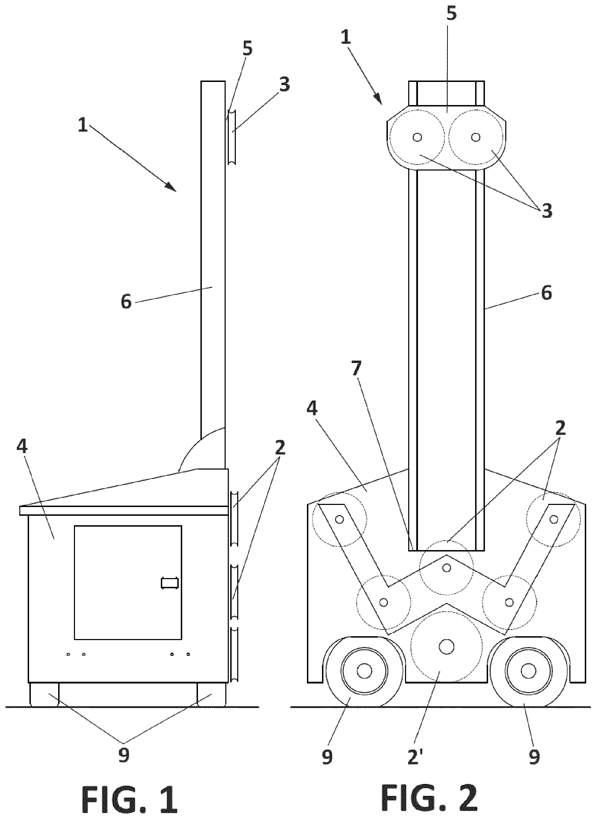

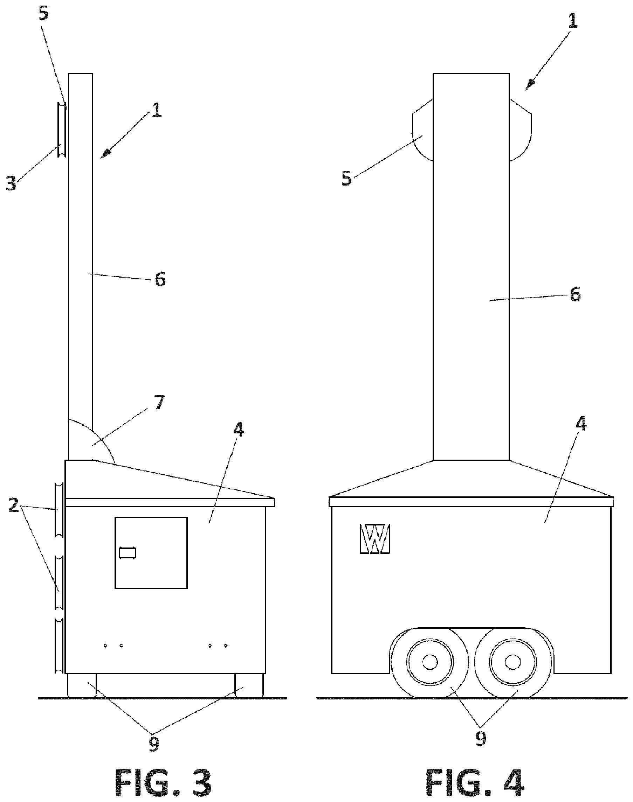

Likewise, each of said legs (8) presents a movement of independent vertical movement in a significant stretch of several centimetres, which allows to regulate the height thereof to level the chassis (4) on a non-flat ground, but also to regulate its inclination in possible operations of oblique cuts that can allow a greater use of the material. To this end, preferably, the legs (8) are inserted into segments (8a) from which are extensible telescopically, whereby they are retractable to be folded in the moving operations of the machine (1) so as not to pose an obstacle as they move on the wheels (9). It should be clarified here that in figures 1 to 4 the machine (1) has the column (6) disposed in the use position, that is, deployed vertically on the chassis (4), but the legs (8) hidden within said chassis (4), being the chassis supported on the wheels (9).

Finally, it should be noted that, in the preferred embodiment, for the operation of the machine (1), in addition to electric motors (not shown) that drive the cart (5) mechanism that determines its displacement along the column (6) and that move the drive pulley, it has hydraulic mechanisms (11) for driving said cart (5) and the drive pulley (2') installed with optional functionality, that is, allowing to choose the operation with electric motors or with hydraulic mechanisms.

## Claims

1. Diamond wire compact cutting machine (1) for the cutting of stones or the like in a quarry, the machine has pulleys(2,3) to insert a cutting diamond wire, whose movement and tightening allows to cut stones and the like interposed in its trajectory in quarries, and comprising a single chassis (4) compact to which, by one of its sides, the pulleys (2, 3) are coupled so that a plurality of them are fixed pulleys (2), coupled directly to the chassis (4), including a drive pulley (2'), and at least two are movable pulleys (3) incorporated in a cart (5) with movement of vertical displacement along a tightening column (6) that extends superiorly above the chassis (4), so that said movement of the cart (5) determines the separation between the fixed pulleys (2) and the movable pulleys (3) to achieve the tightening of the wire, and having, also, in said chassis four legs (8) for its support in the use position, incorporated in the base thereof together with motorized wheels (9) that also has for autonomous movement, wherein the tightening column (6) of the wire is collapsible; and wherein each of the legs (8) presents a movement of independent vertical displacement in a stretch of several centimetres, which allows to regulate the height thereof so as to level the chassis (4) on a non-flat ground and to regulate its inclination in possible operations of oblique cuts,
**characterized in that** the four legs (8) that the chassis (4) has for its support in the use position are coupled thereto with the possibility of horizontal movement, in a lateral direction for regulating the position of the chassis (4) and perfectly aligning the wire with respect to the cutting point or hole.

2. Diamond wire compact cutting machine (1) according to claim 1, **characterized in that** the column (6) is coupled to the chassis (4) through an articulated joint (7) and provided with locking mechanisms that fix it in an elevated vertical use position and in a folded transport position.

3. Diamond wire compact cutting machine (1) according to claim 1 or 2, **characterized in that** the four legs (8) have a movement of horizontal displacement, in a lateral direction, in a stretch of up to 20 cm.

4. Diamond wire compact cutting machine (1) according to any of claims 1 to 3, **characterized in that**, for its movement of horizontal displacement, in a lateral direction, the legs (8) are coupled, in the lower part of the interior of the chassis (4), to guides (10) over which, in the manner of rails, the chassis (4) is supported and moves from one side to the other, its stroke being limited at each end.

5. Diamond wire compact cutting machine (1) according to any of claims 1 to 4, **characterized in that**, for its movement of independent vertical displacement, the legs (8) are inserted in segments (8a) from which they are telescopically extensible.

6. Diamond wire compact cutting machine (1) according to any of claims 1 to 5, **characterized in that**, besides electric motors that drive the mechanism of the cart (5) that determines its displacement along the column (6) and that move the drive pulley, it has hydraulic mechanisms (11) for driving said cart (5) and the drive pulley (2') installed with optional functionality.

## Patentansprüche

1. Kompakt-Diamantdraht-Schneidemaschine (1) zum Schneiden von Steinen oder Ähnlichem in einem Steinbruch, wobei die Maschine Riemenscheiben (2,3) zum Einsetzen eines Diamantdrahts zum Schneiden hat, mit dessen Bewegung und Spannung Steine und Ähnliches geschnitten werden können, die in Steinbrüchen in seine Schnittbahn gebracht werden, und bestehend aus einem einzigen kompakten Gehäuse (4), an das auf der einen Seite die Riemenscheiben (2, 3) gekoppelt sind, sodass mehrere davon befestigte Riemenscheiben sind (2), die direkt an das Gehäuse (4) gekoppelt sind, einschließlich einer Antriebsscheibe (2'), und mindestens zwei bewegliche Riemenscheiben (3), die in einen Schlitten (5) mit einer senkrechen Verschiebebewegung entlang einer Spannungssäule (6) eingefügt sind, die oben über das Gehäuse (4) hinausragt, sodass diese genannte Bewegung des Schlittens (5) den Abstand zwischen den befestigten Riemenscheiben (2) und den beweglichen Riemenscheiben (3) bestimmt, um die Spannung des Drahts zu erzielen, und zudem sind an diesem Gehäuse vier Beine (8) zu dessen Stütze in der Benutzungsposition, eingefügt in der Basis desselben, zusammen mit angetriebenen Rädern (9), die ebenfalls für eine autonome Bewegung vorhanden sind, wobei die Spannungssäule (6) des Drahts zusammenklappbar ist; und dabei weist jedes der Beine (8) eine unabhängige senkrechte Bewegung mit einer Strecke von mehreren Zentimetern auf, mittels derer die jeweilige Höhe reguliert werden kann, sodass das Gehäuse (4) auf einem unebenen Untergrund nivelliert und seine Neigung für eventuelle schräge Schnittvorgänge reguliert werden kann, **gekennzeichnet dadurch, dass** die vier Beine (8), die das Gehäuses (4) als Stützen in der Benutzungsposition hat, daran gekuppelt sind, mit der Möglichkeit einer waagerechten Verschiebungsbewegung in einer seitlichen Richtung, um die Position des Gehäuses (4) zu regulieren und den Draht hinsichtlich des Schnittpunkts oder Loches perfekt auszurichten.

2. Kompakt-Diamantdraht-Schneidemaschine (1) für Steinbruch gemäß Anspruch 1, **gekennzeichnet dadurch, dass** die Säule (6) durch eine Gelenkverbindung (7) an das Gehäuse (4) gekoppelt und mit Sperrmechanismen ausgestattet ist, die sie in einer erhobenen senkrechten Benutzungsposition und in einer zusammengeklappten Transportposition feststellen.

3. Kompakt-Diamantdraht-Schneidemaschine (1) gemäß Anspruch 1 oder 2, **gekennzeichnet dadurch, dass** die vier Beine (8) eine waagerechte Verschiebungsbewegung in seitlicher Richtung mit einer Strecke von bis zu 20 cm haben.

4. Kompakt-Diamantdraht-Schneidemaschine (1) gemäß irgendeinem der Ansprüche 1 bis 3, **gekennzeichnet dadurch, dass** die Beine (8) für ihre waagerechte Verschiebungsbewegung in seitlicher Richtung im unteren Teil des Inneren des Gehäuses (4) an Führungen (10) gekoppelt sind, auf denen das Gehäuse (4) wie auf Schienen gestützt ist und von einer Seite zur anderen bewegt wird, wobei an jedem Ende der Anschlag begrenzt ist.

5. Kompakt-Diamantdraht-Schneidemaschine (1) gemäß irgendeinem der Ansprüche 1 bis 4, **gekennzeichnet dadurch, dass** die Beine (8) für ihre unabhängige senkrechte Schiebebewegung in Segmente (8a) eingefügt sind, aus denen sie teleskopisch ausziehbar sind.

6. Kompakt-Diamantdraht-Schneidemaschine (1) gemäß irgendeinem der Ansprüche 1 bis 5, **gekennzeichnet dadurch, dass** sie nicht nur Elektromotoren besitzt, die den Mechanismus des Schlittens (5) antreiben, der die Fortbewegung entlang der Säule (6) bestimmt, und die die Antriebsscheibe bewegen, sondern auch Hydraulikmechanismen (11), um diesen Schlitten (5) und die Antriebsscheibe (2') antreiben, die mit optionalen Funktionen installiert sind.

## Revendications

1. Machine de coupe compacte à fil diamanté (1) pour la coupe de pierres ou similaires dans une carrière, la machine est équipée de poulies (2,3) pour insérer un fil diamanté coupant, dont le déplacement et le serrage permettent de couper les pierres et autres éléments similaires situés dans sa trajectoire en carrières, et comprenant un seul châssis (4) compact auquel, par l'un de ses côtés, les poulies (2, 3) sont couplées de manière à ce qu'une pluralité d'entre elles soient des poulies fixes (2), couplées directement au châssis (4), comprenant une poulie d'entraînement (2'), et au moins deux sont des poulies mobiles (3) intégrées à un chariot (5) avec un mouvement du déplacement vertical le long d'une colonne de serrage (6) qui s'étend en partie supérieure au-dessus du châssis (4), de sorte que ledit mouvement du chariot (5) détermine la séparation entre les poulies fixes (2) et les poulies mobiles (3) pour obtenir le serrage du fil, et ayant, également, dans ledit châssis quatre pattes (8) pour son support en position d'utilisation, intégré dans sa base ainsi que des roues motorisées (9) qui a également pour mouvement autonome, dans lequel la colonne de serrage (6) du fil est rabattable; et dans lequel chacune des pieds (8) présente un mouvement de déplacement vertical indépendant sur une distance de plusieurs centimètres, qui permet d'en ajuster la hauteur afin de mettre le châssis de niveau (4) sur un sol non plat et d'ajuster son inclinaison dans les opérations possibles de coupes obliques, **caractérisé en ce que** les quatre pieds (8) que le châssis (4) a pour son support en position d'utilisation sont couplés à ce dernier avec la possibilité d'un mouvement horizontal, dans une direction latérale pour ajuster la position du châssis (4) et parfaitement aligner le fil par rapport au point de coupe ou trou.

2. Machine de coupe compacte à fil diamanté (1) pour carrière selon la revendication 1, **caractérisée en ce que** la colonne (6) est couplée au châssis (4) par un joint articulé (7) et équipée de mécanismes de verrouillage qui le fixent dans une position d'utilisation verticale élevée et dans une position de transport repliée.

3. Machine de coupe compacte à fil diamanté (1) selon la revendication 1 ou 2, **caractérisée en ce que** les quatre pieds (8) a un mouvement horizontal, dans une direction latérale, avec un distance allant jusqu'à 20 cm.

4. Machine de coupe compacte à fil diamanté (1) selon l'une quelconque des revendications 1 à 3, **caractérisée en ce que**, pour son mouvement de déplacement horizontal, dans une direction latérale, les pieds (8) sont couplés, dans la partie inférieure de l'intérieur du châssis (4), à des guides (10) sur lesquels, à la manière de rails, le châssis (4) et supporté et se déplace d'un côté à l'autre, sa course étant limitée à chaque extrémité.

5. Machine de coupe compacte à fil diamanté (1) selon l'une quelconque des revendications 1 à 4, **caractérisée en ce que**, pour son mouvement de déplacement vertical indépendant, les pieds (8) sont insérés dans des segments (8a) à partir desquels ils sont extensibles de manière télescopique.

6. Machine de coupe compacte à fil diamanté (1) selon l'une quelconque des revendications 1 à 5, **caractérisée en ce que**, outre les moteurs électriques qui actionnent le mécanisme du chariot (5) qui détermine son déplacement le long de la colonne (6) et qui déplace la poulie d'entraînement, il est doté de mécanismes hydrauliques (11) pour entraîner ledit chariot (5) et la poulie d'entraînement (2') installée avec une fonctionnalité optionnelle.
